# FASCICULE DE BREVET EUROPEEN

(11) **EP 1 818 551 B1**
(45) Date de publication et mention de la délivrance du brevet: **22.10.2008**
(21) Numéro de dépôt: 06301248.8
(22) Date de dépôt: 13.12.2006
(51) Int. Cl.: F16C 7/02

(54) **Bielle de moteur comportant des moyens d'alimentation en lubrifiant du pied de bielle et son procédé de réalisation**
Motorpleuel mit Schmierstoffzuführmitteln für das Lagerende und Mittel zur Herstellung
Motor connection rod comprising lubricant supply means for the bearing end and construction means

(30) Priorité: 23.12.2005 FR 0554070
(43) Date de publication de la demande: 15.08.2007
(73) Titulaire: RENAULT S.A.S., 92100 Boulogne Billancourt (FR)
(72) Inventeur: Ragot, Patrick, 75018 Paris (FR); Ligier, Jean-Louis, 78400 Chatou (FR)

(56) Documents cités:
- EP-A- 0 095 052
- DE-A1- 3 600 750
- DE-A1- 3 614 532
- US-A- 1 959 279
- PATENT ABSTRACTS OF JAPAN vol. 1998, no. 09, 31 juillet 1998 (1998-07-31) -& JP 10 110722 A (KOMATSU LTD), 28 avril 1998 (1998-04-28)

## Description

L'invention concerne une bielle de moteur à combustion comportant des moyens d'alimentation en lubrifiant du pied de bielle.

L'invention concerne plus précisément une bielle de moteur à combustion comportant un agencement pour la lubrification de l'alésage d'axe du pied de bielle qui est apte à recevoir un axe d'entraînement d'un piston du moteur, du type dans laquelle l'alésage du pied de bielle est délimité axialement par au moins une première face d'extrémité axiale, et du type dans laquelle l'agencement comporte au moins une première cavité de lubrification ouverte dans la première face d'extrémité axiale et ouverte dans la face latérale concave de l'alésage, au moins en partie en dessous de l'axe de l'alésage.

Une bielle de moteur à combustion interne a pour fonction de relier un piston au vilebrequin. La bielle est très fortement sollicitée en traction, compression et flexion et elle relie un axe d'entraînement du piston à sa première extrémité et un maneton d'un vilebrequin à sa seconde extrémité.

La bielle comporte un pied de bielle portant l'axe d'entraînement du piston et comporte une tête de bielle reliée au vilebrequin du moteur.

Le pied de bielle comporte un alésage qui reçoit l'axe d'entraînement du piston. Afin de réduire la friction entre ces deux pièces mobiles en pivotement autour de l'axe, ce dernier comporte souvent une bague circulaire, dite bague de pied, recouverte ou constituée de métal anti-friction, par exemple du bronze.

Cependant, il est souhaitable de lubrifier efficacement les surfaces de friction du pied de bielle, pour éviter un grippage entre le pied de bielle et l'axe du piston.

Afin d'accroître l'efficacité de la lubrification entre l'alésage du pied de bielle et l'axe d'entraînement du piston, il est préférable de lubrifier la partie "inférieure" de la paroi cylindrique concave de l'alésage du pied de bielle, en considérant une orientation conventionnelle globalement verticale de la bielle avec le pied en haut et la tête de bielle en bas, car cette partie inférieure est soumise à de fortes pressions lors du fonctionnement du moteur.

Dans l'état de la technique on a déjà présenté des moyens d'alimentation en lubrifiant de l'alésage du pied de bielle.

L'une des techniques consiste à équiper le pied de bielle d'un ou plusieurs conduits dans sa partie verticalement supérieure. Ainsi, l'huile de refroidissement du moteur qui éclabousse ou qui baigne le pied de bielle est acheminée par les conduits dans l'alésage du pied de bielle.

Cette technique ne répond que partiellement au problème du grippage de l'axe du piston et du pied de bielle, car l'huile n'est pas ou peu acheminée directement dans la partie inférieure de l'alésage du pied de bielle.

A cet effet, selon une variante de la technique précédemment décrite, les conduits ou perçages du pied de bielle qui acheminent l'huile débouchent dans une gorge radiale qui est usinée dans la surface concave de l'alésage du pied de bielle. La gorge permet à l'huile de former un film entre les deux surfaces de friction, notamment dans la partie inférieure de l'alésage, mais la réalisation de la gorge est coûteuse et complexe.

Une autre technique consiste à équiper l'alésage de pied de bielle d'une cavité d'huile de lubrification de l'alésage.

Le document JP-A-10110722 décrit une telle technique, qui consiste en un alésage de pied de bielle comportant une cavité à chaque extrémité axiale. Chaque cavité forme globalement une calotte hémisphérique ouverte dans une extrémité axiale de l'alésage et chaque cavité est reliée à une extrémité d'un canal d'alimentation.

Le canal d'alimentation du pied de bielle est usinée selon une pente et s'étend selon une direction sensiblement axiale, de la cavité vers une partie inférieure en dessous de l'axe de l'alésage du pied de bielle.

Une telle technique est difficile à mettre en oeuvre et ce type de cavité ne permet pas une rétention suffisante de l'huile.

Le document DE 3 614 532 propose une solution, mais nécessitant un coussinet perfectionné.

L'invention est un perfectionnement de l'état de la technique qui vise à alimenter en huile une partie inférieure de l'alésage du pied de bielle par des moyens simple à mettre en oeuvre en vue notamment de constituer une réserve ou un réservoir d'huile associé au pied de bielle.

A cet effet, l'invention propose une bielle de moteur à combustion interne du type décrit précédemment, caractérisée en ce que la première cavité de lubrification est ouverte verticalement vers le haut du pied de bielle, et est délimitée par une première et une seconde parois, dont chacune s'étend globalement radialement selon une direction de haut en bas et de l'extérieur vers l'intérieur par rapport à l'alésage, de manière que la partie basse de la cavité de lubrification forme avec la surface latéral convexe de l'axe d'entraînement du piston, une zone de stockage de lubrifiant.

Selon d'autres caractéristiques de l'invention :
- le pied de bielle présente un plan de symétrie axial qui s'étend verticalement, de manière que la face d'extrémité axiale du pied de bielle comporte une deuxième cavité de lubrification, symétrique de la première cavité ;
- le pied de bielle présente un plan de symétrie radial qui s'étend verticalement, de manière qu'une seconde face d'extrémité axiale du pied de bielle comporte une troisième cavité symétrique à la première cavité et comporte une quatrième cavité symétrique à la deuxième cavité.

L'invention concerne aussi un procéder de réalisation d'une bielle selon l'invention caractérisé en ce qu'il comporte une étape d'usinage des cavités par fraisage au moyen d'une fraise dont l'axe est déplacé de haut en bas par rapport au pied de bielle.

Selon d'autres caractéristiques du procédé :
- l'axe de la fraise est situé dans le plan axial vertical du pied de bielle ;
- la fraise est cylindrique et l'axe de la fraise est incliné par rapport à l'axe de l'alésage ;
- la fraise est conique et l'axe de la fraise est parallèle à l'axe de l'alésage.

D'autres caractéristiques et avantages de l'invention apparaîtront à la lecture de la description détaillée qui suit pour la compréhension de laquelle on se reportera aux dessins annexés dans lesquels :
- la figure 1a est une vue schématique en perspective d'un pied de bielle selon un premier mode de réalisation de l'invention ;
- la figure 1b est une vue analogue à la figure 1 du pied de bielle et d'un axe de piston ;
- la figure 2 est une vue de face en coupe par un plan vertical selon l'axe passant par le pied de bielle illustré à la figure 1 ;
- la figure 3 est une vue latérale droite avec arrachement du pied de bielle illustré à la figure 1 et de l'axe d'entraînement du piston associé en coupe partielle ;
- la figure 4 est une vue de dessus du pied de bielle illustré à la figure 1 ;
- la figure 5 est une vue analogue à celle de la figure 2 qui illustre un second mode de réalisation de l'invention ;
- la figure 6 est une vue analogue à celle de la figure 3 qui illustre le second mode de réalisation ;
- la figure 7 est une vue analogue à celle de la figure 4 qui illustre le second mode de réalisation.

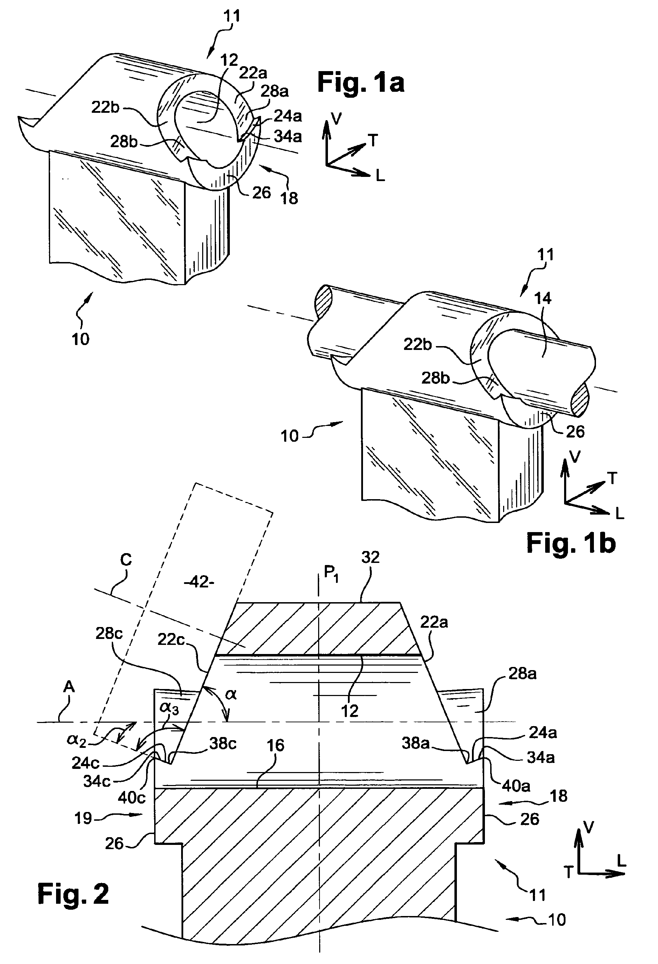

Dans la description qui va suivre, on utilisera à titre non limitatif les termes horizontal, vertical, haut, bas, ainsi que les directions longitudinale, verticale et transversale en référence aux figures et définitions données dans la description et selon le trièdre (L, V, T) représenté aux figures 1 à 7.

La figure 1 représente un agencement pour la lubrification d'un pied de bielle 11 d'une bielle 10 selon un premier mode de réalisation de l'invention.

Le corps de pied de bielle 11 est ici de forme globalement tubulaire cylindrique d'axe horizontal A et il est délimité radialement par une face latérale convexe extérieure 32. En outre, il comporte un alésage 12 apte à recevoir un axe d'entraînement 14 d'un piston de moteur à combustion interne (non représentés). Le pied de bielle 11, l'alésage 12 ainsi que l'axe d'entraînement 14 du piston sont coaxiaux selon l'axe A.

Le pied de bielle 11 présente une symétrie générale de conception par rapport à un plan radial de symétrie P1, représenté à la figure 2, qui s'étend verticalement et selon une direction transversale T.

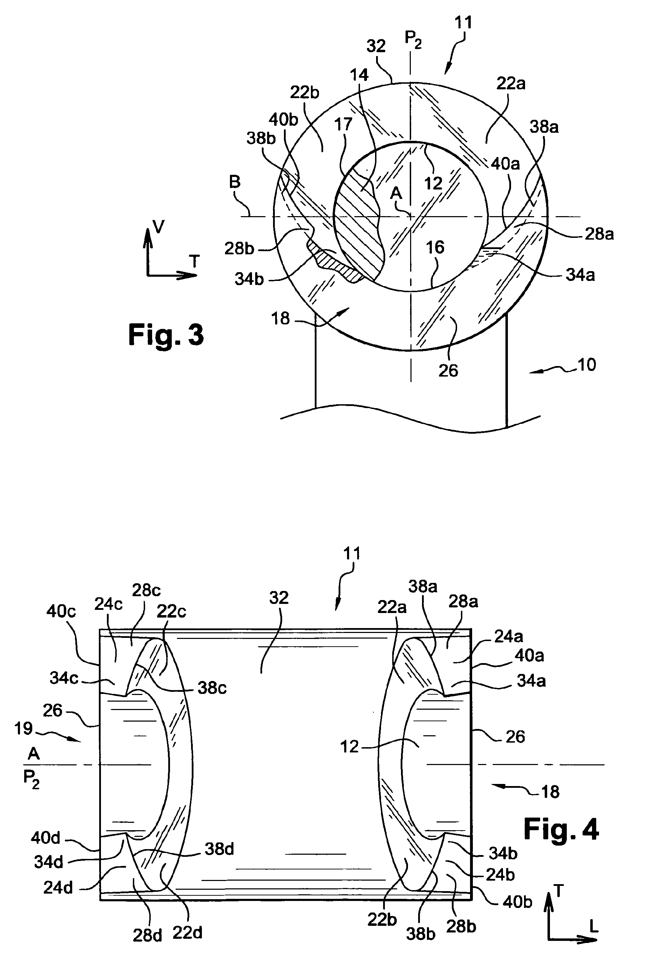

De même, le pied de bielle 11 présente une symétrie générale de conception par rapport à un plan axial de symétrie P2, représenté aux figures 3 et 4, qui s'étend verticalement et selon une direction longitudinale L.

Ainsi, par symétrie selon les plans de symétrie P1 et P2, le pied de bielle 11 comporte quatre parties dont les éléments identiques, similaires ou analogues seront désignés par les mêmes chiffres de référence indicés "a", "b", "c" et "d" respectivement, représentés aux figures.

En vue de simplifier la compréhension de l'invention, la description qui suit sera limitée à la description d'une seule partie, qui est indicée de la référence "a".

L'axe d'entraînement 14 du piston, illustré à la figure 3, transmet les efforts du piston au pied de bielle 11, notamment des efforts de traction et de compression qui engendrent une oscillation ou pivotement alterné selon l'axe A et un déplacement vertical du pied de bielle 11, et donc de la bielle 10.

La surface latérale interne concave 16 de l'alésage 12 du pied de bielle 11 est en contact de friction avec la surface latérale cylindrique convexe 17 de l'axe d'entraînement 14 du piston.

Le pied de bielle 11 est délimité axialement par une première 18 et une seconde 19 faces annulaires d'extrémité axiale qui sont opposées.

La première face d'extrémité axiale 18 de l'alésage 12 comporte une portion de surface radiale inférieure 26 qui s'étend dans un plan vertical ou transversal perpendiculairement à l'axe A du pied de bielle 11.

Conformément à l'invention, la première face d'extrémité axiale 18 de l'alésage 12 comporte une première paroi 22a, ou grande paroi 22a, et une seconde paroi 24a, ou petite paroi 24a, délimitant entre elles et avec l'axe 14 une cavité 28a de lubrification.

La cavité 28a de lubrification est globalement ouverte verticalement vers le haut ainsi que dans l'alésage 12 en partie en dessous de l'axe A, et enfin dans la première face d'extrémité axiale 18 du pied de bielle 11, comme le montre les figures 2, 3 et 4.

La grande paroi 22a de la cavité 28a est plane, elle s'étend transversalement et sensiblement verticalement vers le haut jusqu'à la face latérale convexe extérieure 32 du pied de bielle 11. Plus précisément, la grande paroi 22a forme un angle α1 aigu avec l'axe A de l'alésage 12, qui est avantageusement compris entre 30° et 80°, selon le premier mode de réalisation.

L'intersection de la grande paroi 22a et de la petite paroi 24a est une arête commune 38a formant un arc de cercle qui conforme le fond de la cavité 28a et qui s'étend depuis l'alésage 12 jusqu'à la face latérale convexe extérieure 32 du pied de bielle 11.

La petite paroi 24a de la cavité 28a est concave et forme une portion de cylindre dont l'axe (non représenté) est situé dans le plan de symétrie P2.

De plus, la petite paroi 24a de la cavité 28a s'étend sensiblement verticalement depuis le fond de la cavité 28a, jusqu'à la surface radiale 26. Ainsi, l'intersection de la petite paroi 24a et de la surface radiale 26 est une arête commune 40a formant un arc de cercle. La petite paroi 24a forme un angle aigu α2 avec l'axe A de l'alésage 12.

Les deux parois 22a et 24a de la cavité 28a forment ici entre elles un angle droit α3.

La cavité 28a délimite ainsi une zone de stockage 34a qui est située dans la portion du fond de la cavité 28a qui est adjacent à l'alésage 12. La zone de stockage 34a est délimitée par une portion "inférieure" des deux parois 22a, 24a de la cavité 28a et par une portion de l'axe d'entraînement 14 du piston, illustré à la figure 3.

Par conséquent, le volume de la zone de stockage 34a est fonction :
- de l'angle α1 formé entre la grande paroi 22a et l'axe A de l'alésage 12 ;
- de l'angle α2 formé entre la petite paroi 24a et l'axe A de l'alésage 12 ; et
- d'une hauteur h1 qui correspond à la distance verticale entre le point le plus bas de l'arête 38a et le point le plus bas de l'arête 40a.

Par symétrie, le pied de bielle 11 comporte une deuxième cavité 28b transversalement opposée à la première cavité 28a et agencée dans la première extrémité axiale 18, selon le plan de symétrie P2. De même, le pied de bielle 11 comporte deux autres cavités 28c et 28d longitudinalement opposées aux deux cavités 28a, 28b respectivement et transversalement opposées entre elles, selon le plan de symétrie P1.

Les parois 22a, 22b et 24a, 24b qui forment les cavités 28a et 28b sont avantageusement réalisées par un simple usinage qui consiste en une opération de fraisage de la première extrémité axiale 18 de l'alésage 12.

L'opération de fraisage est réalisée avec une fraise 42 cylindrique deux tailles, représentée en pointillés à la figure 2, qui est apte à engendrer une face de révolution cylindrique combinée à une face plane en forme de disque. La fraise 42 comporte ici un diamètre supérieur au diamètre du pied de bielle 11 et son axe C de rotation est situé dans le plan P2 et est incliné de l'angle α2 par rapport à l'axe A de l'alésage.

Lors de l'opération de fraisage, la fraise 42 usine la première face d'extrémité axiale 18 du pied de bielle 11 selon un mouvement globalement de haut en bas de façon à engendrer simultanément les parois 22a, 22b, 24a, 24b formant les deux cavités 28a, 28b.

Par conséquent, l'angle α3 formé entre les grandes 22a, 22b et les petites 24a, 24b parois des cavités 28a, 28b dépend de la forme de la fraise 42.

Dans une seconde opération de fraisage, une fraise 42 usine la seconde extrémité axiale 19 du pied de bielle 11 de manière identique à la première opération de fraisage, de façon à engendrer les parois 22c, 22d, 24c, 24d formant les deux cavités 28c, 28d.

A titre non limitatif, les deux extrémités axiales 18 et 19 peuvent être usinées simultanément par deux fraises ou "train de fraises", de manière à diminuer le temps de l'usinage du pied de bielle 11 selon l'invention.

Selon un second mode de réalisation, l'invention comporte les mêmes caractéristiques que le premier mode de réalisation, à l'exception de l'inclinaison des grandes parois 22a, 22b, 22c, 22d qui forment ici un angle α1 droit avec l'axe A. De plus, les petites parois 24a, 24b, 24c, 24d forment un angle α2 aigu avec l'axe A sensiblement égal à l'angle α2 selon le premier mode de réalisation.

Ainsi, le second mode de réalisation de l'invention permet de limiter la quantité de matière enlevée lors de l'usinage et donc de moins fragiliser le pied de bielle 11 en fonction des besoins.

En effet, plus l'angle α1 entre l'axe A et les grandes faces 22a, 22b, 22c, 22d est petit, plus la face latérale convexe extérieure 32 du pied de bielle est étroite, notamment dans une partie haute sollicitée en traction et compression.

L'invention selon le second mode de réalisation est réalisée par un usinage qui consiste en une opération de fraisage à chaque extrémité axiale 18, 19 du pied de bielle 11.

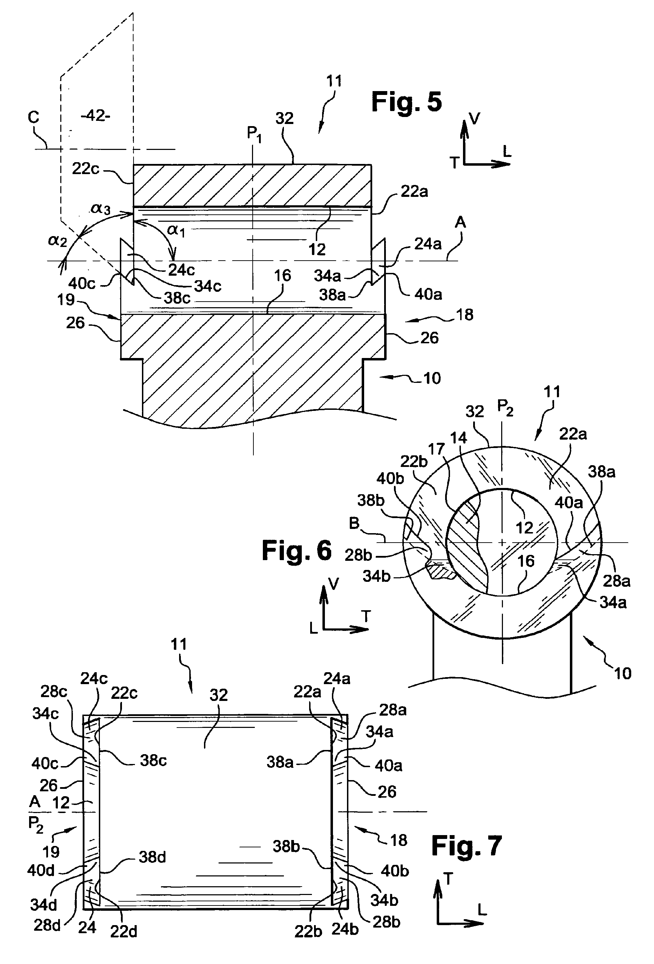

A la différence du premier mode de réalisation, l'opération de fraisage est ici réalisée avec une fraise 42 conique deux tailles, représentée en pointillés à la figure 5, qui est apte à engendrer une face de révolution conique combinée à une face plane en forme de disque, formant entre elles un angle aigu α3. La fraise 42 comporte ici un diamètre supérieur au diamètre du pied de bielle 11 et son axe C de rotation est situé dans le plan P2 et est parallèle à l'axe A de l'alésage 12.

Lors de l'opération de fraisage, la fraise 42 usine la face d'extrémité axiale 18 du pied de bielle 11 selon un mouvement globalement de haut en bas de façon à engendrer simultanément les faces formant les deux cavités 28a, 28b.

Par conséquent, l'angle α3 formé entre les grandes 22a, 22b et les petites 24a, 24b parois des cavités 28a, 28b dépend de la forme de la fraise 42.

Dans une seconde opération de fraisage, une fraise usine la seconde extrémité axiale 19 du pied de bielle 11 de manière identique à la première opération de fraisage, de façon à engendrer les parois 22c, 22d, 24c, 24d formant les deux cavités 28c, 28d.

Lors du fonctionnement du moteur, les grandes parois 22a, 22b, 22c, 22d et les petites parois 24a, 24b, 24c, 24d des cavités 28a, 28b, reçoivent de l'huile qui se dirige par gravité vers les zones de stockage 34a, 34b, 34c, 34d respectivement.

L'huile reçue dans les zones de stockage 34a, 34b, 34c, 34d s'écoule par un jeu entre l'alésage 12 et l'axe d'entraînement 14 du piston.

A titre non limitatif, un élément intermédiaire, comme une bague, une douille ou un coussinet (non représentés), peut être agencé entre l'alésage 12 du pied de bielle 11 et l'axe d'entraînement 14 du piston.

De même, le pied de bielle 11 selon l'invention peut s'adapter à des bielles dites à "tête de vipère", lesquelles sont surtout sollicitées en compression et dont les faces d'extrémités axiales 18, 19 ne sont pas parallèles.

Enfin, à titre non limitatif, le pied de bielle 11 selon l'invention peut être réalisé par moulage.

Grâce au pied de bielle 11 selon l'invention, il est possible de lubrifier efficacement l'alésage 12 du pied de bielle 11 en quatre zones agencées en dessous de l'axe A de l'alésage 12.

De plus, le pied de bielle 11 selon l'invention est économique et simple à réaliser.

## Revendications

1. Bielle (10) de moteur à combustion interne comportant un agencement pour la lubrification de l'alésage (12) d'axe (A) du pied de bielle (11) qui est apte à recevoir un axe d'entraînement (14) d'un piston du moteur,
du type dans laquelle l'alésage (12) du pied de bielle (11) est délimité axialement par au moins une première (18) face d'extrémité axiale, et
l'agencement comporte au moins une première cavité (28a) de lubrification ouverte dans la première face d'extrémité axiale (18) et ouverte dans la face latérale concave (16) de l'alésage (12), au moins en partie en dessous de l'axe (A) de l'alésage (12),
la première cavité (28a) de lubrification est ouverte verticalement vers le haut du pied de bielle (11), et est délimitée par une première (22a) et une seconde (24a) parois, dont chacune s'étend globalement radialement selon une direction de haut en bas et de l'extérieur vers l'intérieur par rapport à l'alésage (12), de manière que la partie basse de la cavité (28a) de lubrification forme avec la surface latéral convexe (17) de l'axe d'entraînement (14) du piston, une zone (34a) de stockage de lubrifiant **caractérisé en ce que** la première cavité (28a) de lubrification est réalisée dans le pied de bielle.

2. Bielle (10) de moteur à combustion selon la revendication 1, **caractérisée en ce que** le pied de bielle (11) présente un plan de symétrie axial (P2) qui s'étend verticalement, de manière que la face d'extrémité axiale (18) du pied de bielle (11) comporte une deuxième cavité (28b) de lubrification, symétrique de la première cavité (28a).

3. Bielle (10) de moteur à combustion selon la revendication précédente, **caractérisée en ce que** le pied de bielle (11) présente un plan de symétrie radial (P1) qui s'étend verticalement, de manière qu'une seconde face d'extrémité axiale (19) du pied de bielle (11) comporte une troisième cavité (28c) symétrique à la première cavité (28a) et comporte une quatrième cavité (28d) symétrique à la deuxième cavité (28b).

4. Procédé de fabrication d'une bielle (10) de moteur à combustion interne comportant un agencement pour la lubrification de l'alésage (12) selon les revendications 2 ou 3, **caractérisé en ce qu'**il comporte une étape d'usinage des cavités (28a, 28b, 28c, 28d) par fraisage au moyen d'une fraise (42) dont l'axe (C) est déplacé de haut en bas par rapport au pied de bielle (11).

5. Procédé de fabrication d'une bielle (10) de moteur à combustion interne comportant un agencement pour la lubrification de l'alésage (12) selon les revendications 2, 3 ou 4, **caractérisé en ce que** l'axe (C) de la fraise (42) est situé dans le plan axial (P2) vertical du pied de bielle (11).

6. Procédé de fabrication d'une bielle (10) de moteur à combustion interne comportant un agencement pour la lubrification de l'alésage (12) selon les revendications 4 ou 5, **caractérisé en ce que** la fraise (42) est cylindrique et l'axe (C) de la fraise (42) est incliné par rapport à l'axe (A) de l'alésage (12).

7. Procédé de fabrication d'une bielle (10) de moteur à combustion interne comportant un agencement pour la lubrification de l'alésage (12) selon les revendications 4 ou 5, **caractérisé en ce que** la fraise (42) est conique et l'axe (C) de la fraise (42) est parallèle à l'axe (A) de l'alésage (12).

## Claims

1. Connecting rod (10) of an internal combustion engine comprising an arrangement for the lubrication of the bore (12) with the axis (A) of the small end (11) that is capable of receiving a drive shaft (14) of a piston of the engine,
of the type wherein the bore (12) of the small end (11) is delimited axially by at least a first axial end face (18), and
the arrangement comprises at least one first lubrication cavity (28a) that is open in the first axial end face (18) and open in the concave lateral face (16) of the bore (12), at least partly beneath the axis (A) of the bore (12),
the first lubrication cavity (28a) is open vertically towards the top of the small end (11), and is delimited by a first wall (28a) and a second wall (24a), each of which extends generally radially in a direction from top to bottom and from the outside to the inside relative to the bore (12), so that the bottom portion of the lubrication cavity (28a) forms, with the convex lateral surface (17) of the drive shaft (14) of the piston, a lubricant storage zone (34a), **characterized in that** the first lubrication cavity (28a) is made in the small end.

2. Connecting rod (10) of a combustion engine according to Claim 1, **characterized in that** the small end (11) has a plane (P2) of axial symmetry, which extends vertically, so that the axial end face (18) of the small end (11) comprises a second lubrication cavity (28b) symmetrical with the first cavity (28a).

3. Connecting rod (10) of a combustion engine according to the preceding claim, **characterized in that** the small end (11) has a plane (P1) of radial symmetry which extends vertically, so that a second axial end face (19) of the small end (11) comprises a third cavity (28c) symmetrical with the first cavity (28a) and comprises a fourth cavity (28d) symmetrical with the second cavity (28b).

4. Method of manufacturing a connecting rod (10) of an internal combustion engine comprising an arrangement for the lubrication of the bore (12) according to Claims 2 or 3, **characterized in that** it comprises a step of machining the cavities (28a, 28b, 28c, 28d) by milling by means of a mill (42) whose axis (C) is moved from top to bottom relative to the small end (11).

5. Method of manufacturing a connecting rod (10) of an internal combustion engine comprising an arrangement for the lubrication of the bore (12) according to Claims 2, 3 or 4, **characterized in that** the axis (C) of the mill (42) is situated in the vertical axial plane (P2) of the small end (11).

6. Method of manufacturing a connecting rod (10) of an internal combustion engine comprising an arrangement for the lubrication of the bore (12) according to Claims 4 or 5, **characterized in that** the mill (42) is cylindrical and the axis (C) of the mill (42) is inclined relative to the axis (A) of the bore (12).

7. Method of manufacturing a connecting rod (10) of an internal combustion engine comprising an arrangement for the lubrication of the bore (12) according to Claims 4 or 5, **characterized in that** the mill (42) is conical and the axis (C) of the mill (42) is parallel to the axis (A) of the bore (12).

## Patentansprüche

1. Pleuelstange (10) für Brennkraftmaschinen, die eine Anordnung für die Schmierung der Bohrung (12) mit Achse (A) des kolbenseitigen Pleuelstangenkopfes (11), die eine Antriebswelle (14) eines Kolbens der Maschine aufnehmen kann, enthält,
des Typs, in dem die Bohrung (12) des kolbenseitigen Pleuelstangenkopfes (11) axial durch wenigstens eine erste axiale Stirnfläche (18) begrenzt ist, und
die Anordnung wenigstens einen ersten Schmierungshohlraum (28a) aufweist, der in der ersten axialen Stirnfläche (18) offen ist und in der konkaven Seitenfläche (16) der Bohrung (12) wenigstens teilweise unterhalb der Achse (A) der Bohrung (12) offen ist,
wobei der erste Schmierungshohlraum (28a) vertikal zur Oberseite des kolbenseitigen Pleuelstangenkopfes (11) offen ist und durch eine erste Wand (22a) und eine zweite Wand (24a) begrenzt ist, wovon sich jede im Allgemeinen radial in einer Richtung von oben nach unten und von außen nach innen in Bezug auf die Bohrung (12) erstreckt, derart, dass der untere Teil des Schmierungshohlraums (28a) mit der konvexen seitlichen Oberfläche (17) der Antriebswelle (14) des Kolbens eine Zone (34a) für die Aufbewahrung von Schmiermittel bildet, **dadurch gekennzeichnet, dass** der erste Schmierungshohlraum (28a) im kolbenseitigen Pleuelstangenkopf verwirklicht ist.

2. Pleuelstange (10) für Brennkraftmaschinen nach Anspruch 1, **dadurch gekennzeichnet, dass** der kolbenseitige Pleuelstangenkopf (11) eine axiale Symmetrieebene (P2) aufweist, die sich vertikal erstreckt, derart, dass die axiale Stirnfläche (18) des kolbenseitigen Pleuelstangenkopfes (11) einen zweiten Schmierungshohlraum (28b) aufweist, der zu dem ersten Hohlraum (28a) symmetrisch ist.

3. Pleuelstange (10) für Brennkraftmaschinen nach dem vorhergehenden Anspruch, **dadurch gekennzeichnet, dass** der kolbenseitige Pleuelstangenkopf (11) eine radiale Symmetrieebene (P1) aufweist, die sich vertikal erstreckt, derart, dass eine zweite axiale Stirnfläche (19) des kolbenseitigen Pleuelstangenkopfes (11) einen dritten Hohlraum (28c) aufweist, der zum ersten Hohlraum (28a) symmetrisch ist, und einen vierten Hohlraum (28d) aufweist, der zum zweiten Hohlraum (28b) symmetrisch ist.

4. Verfahren zum Herstellen einer Pleuelstange (10) für Brennkraftmaschinen, die eine Anordnung für die Schmierung der Bohrung (12) nach den Ansprüchen 2 oder 3 aufweist, **dadurch gekennzeichnet, dass** es einen Schritt des Bearbeitens der Hohlräume (28a, 28b, 28c, 28d) durch Fräsen mittels einer Fräse (42), deren Achse (C) in Bezug auf den kolbenseitigen Pleuelstangenkopf (11) von oben nach unten verlagert wird, enthält.

5. Verfahren zum Herstellen einer Pleuelstange (10) für Brennkraftmaschinen, die eine Anordnung für die Schmierung der Bohrung (12) nach den Ansprüchen 2, 3 oder 4 aufweist, **dadurch gekennzeichnet, dass** sich die Achse (C) der Fräse (42) in der vertikalen axialen Ebene (P2) des kolbenseitigen Pleuelstangenkopfes (11) befindet.

6. Verfahren zum Herstellen einer Pleuelstange (10) für Brennkraftmaschinen, die eine Anordnung für die Schmierung der Bohrung (12) nach den Ansprüchen 4 oder 5 aufweist, **dadurch gekennzeichnet, dass** die Fräse (42) zylindrisch ist und die Achse (C) der Fräse (42) in Bezug auf die Achse (A) der Bohrung (12) geneigt ist.

7. Verfahren zum Herstellen einer Pleuelstange (10) für Brennkraftmaschinen, die eine Anordnung für die Schmierung der Bohrung (12) nach den Ansprüchen 4 oder 5 aufweist, **dadurch gekennzeichnet, dass** die Fräse (42) konisch ist und die Achse (C) der Fräse (42) zu der Achse (A) der Bohrung (12) parallel ist.
